# FASCICULE DE BREVET EUROPEEN

(11) **EP 1 791 745 B1**
(45) Date de publication et mention de la délivrance du brevet: **17.12.2008**
(21) Numéro de dépôt: 05798166.4
(22) Date de dépôt: 05.09.2005
(51) Int. Cl.: B60W 40/10

(54) **PROCEDE D'ELABORATION D'UNE CONSIGNE DE COMMANDE ADAPTEE A UNE SITUATION DE PENTE ET/OU DE CHARGE POUR UN DISPOSITIF DE TRANSMISSION D'UN GROUPE MOTOPROPULSEUR DE VEHICULE AUTOMOBILE ET DISPOSITIF CORRESPONDANT**
VERFAHREN ZUR ERZEUGUNG EINES AN EINE NEIGUNGS- UND/ODER LADESITUATION ANGEPASSTEN STEUERSOLLWERTES FÜR EINE FAHRZEUGMOTOR-GETRIEBEEINHEIT, GETRIEBEVORRICHTUNG UND ENTSPRECHENDE VORRICHTUNG
METHOD FOR PRODUCING A CONTROL SETPOINT ADAPTED TO A SLOPE AND/OR LOAD SITUATION FOR A MOTOR VEHICLE ENGINE-TRANSMISSION UNIT TRANSMISSION DEVICE AND CORRESPONDING DEVICE

(30) Priorité: 10.09.2004 FR 0409647
(43) Date de publication de la demande: 06.06.2007
(73) Titulaire: RENAULT S.A.S., 92100 Boulogne Billancourt (FR)
(72) Inventeur: ROUDEAU, Frédéric, F-94400 VITRY SUR SEINE (FR); BRETHEAU, Jean, F-92160 ANTONY (FR); VERMUSE, Vincent, F-91180 SAINT GERMAIN LES ARPAJONS (FR)
(86) Numéro de dépôt international: PCT/FR2005/050709
(87) Numéro de publication internationale: WO 2006/030143

(56) Documents cités:
- EP-A- 1 275 551
- US-A- 4 720 793
- US-B1- 6 269 296
- US-B1- 6 346 064

## Description

La présente invention concerne un procédé de commande d'un dispositif de transmission d'un groupe moto-propulseur de véhicule automobile en situation dite de pente et/ou de charge. Elle concerne aussi un dispositif mettant en oeuvre un tel procédé de commande.

Ce procédé s'applique avantageusement aux dispositifs de transmission automatisée notamment les Boîtes à Commande Impulsionnelle dites BCI, les Boîtes à Commande Automatique dites BVA et les Boîtes de Vitesses Robotisées dites BVR, mais aussi les transmission à rapport continu telles que les CVT ((« Continuous Variable Transmission » en langue anglaise), les IVT (« Infinitely Variable Transmission » en langue anglaise) et les transmissions hybrides.

Une transmission automatisée de véhicule automobile comporte classiquement un bloc de commande recevant un ou plusieurs paramètres d'entrée interprétant entre autres, la volonté du conducteur. Puis, en fonction de la valeur de ces paramètres, le bloc de commande délivre une consigne de commande destinée aux roues du véhicule automobile.

Une évolution d'un tel bloc de commande a déjà été décrite dans le document FR-A-2827339, au nom de la Demanderesse. Ce document détaille un dispositif de contrôle du point de fonctionnement d'un groupe motopropulseur. Le contrôle réalisé par ce dispositif est un contrôle en couple à appliquer aux roues du véhicule automobile. Tel que définie dans le document FR-A-2827339, la valeur du couple à appliquer aux roues du véhicule automobile, est calculée directement au niveau des roues du véhicule automobile.

Le dispositif du document FR-A-2827339 possède un module d'interprétation de la volonté du conducteur appelé module IVC.

Le module IVC génère une consigne de couple à appliquer aux roues, à destination d'un bloc d'optimisation du point de fonctionnement OPF. Ce dernier transmet ledit couple en vue d'un contrôle en couple à appliquer aux roues du véhicule automobile. Le bloc OPF génère simultanément une consigne de régime moteur à partir de la consigne dudit couple à appliquer aux roues du véhicule automobile. On détermine cette consigne de couple à appliquer aux roues du véhicule automobile en fonction de la volonté du conducteur, des caractéristiques du véhicule automobile et de son environnement, afin d'adapter au mieux le comportement du véhicule automobile, selon les situations de conduite.

En situation de pente et/ou de charge, il est indispensable d'adapter la consigne de couple à appliquer aux roues du véhicule automobile, de manière à offrir un confort de conduite optimal au conducteur.

La charge du véhicule automobile évolue notamment selon :
- l'embarquement d'une charge supplémentaire (passager(s), bagage(s)...),
- la traction d'une charge roulante additionnelle (remorque, caravane, ...)
- l'effet du vent sur la caisse du véhicule automobile.

En outre, l'effet de la pente de la route (côte ou descente) nécessite également une adaptation de la consigne délivrée aux roues du véhicule automobile.

Par exemple, le véhicule automobile, équipé d'une transmission automatique classique, ne différencie pas une situation de descente d'une position de pédale d'accélération au repos. Pour cette raison, le calculateur choisit le rapport de transmission le plus long au détriment du frein moteur. La sensation d'entraînement ressentie par les occupants du véhicule automobile est alors très inconfortable.

On connaît dans l'état de la technique, par le document FR-2 822 972 au nom de la Demanderesse, un dispositif d'estimation de la charge du véhicule automobile générant une consigne de couple représentatif de la charge à laquelle est soumis le véhicule automobile. Ce dispositif concerne uniquement les boîtes automatiques à transmission continûment ou infiniment variable.

On connaît également par la demande FR-2791751 au nom de la Demanderesse et de PSA un dispositif d'adaptation automatique d'une boîte de vitesses à une situation de descente. Ce dispositif génère des consignes en rapport de boîte et est adapté aux transmissions à rapport discret. En effet, il est difficile à gérer et manque en outre de précision dans le cas des boîtes de vitesse à transmission continue.

La demande FR-2 801 952 au nom de la Demanderesse et de PSA propose un procédé de commande d'une transmission automatique en fonction du profil de la route. Ce dispositif génère une consigne de commande en couple selon deux lois de passage. Ces lois de passage sont déterminées en fonction d'un seuil dépendant de la pente de la route. Le dispositif du document FR-2 801 952 est destiné aux boîtes de transmission à rapports discrets.

La présente invention a pour but de remédier aux inconvénients précités. Le principe du dispositif proposé consiste à prévoir une adaptation de la consigne de couple à appliquer aux roues du véhicule automobile afin d'améliorer le comportement du véhicule automobile en situation de pente et/ou de charge. L'invention prévoit d'augmenter la consigne de couple à appliquer à la roue (au sens défini précédemment) disponible, en situation de montée et/ou de charge afin d'améliorer le potentiel d'accélération du véhicule. En outre, le dispositif propose d'augmenter la consigne de couple à appliquer à la roue disponible en situation de descente afin d'accroître le frein moteur dans ce cas.

En outre, l'adaptation proposée par l'invention est capable de fonctionner avec tout type de transmission.

À cet effet, l'invention propose un procédé de commande d'une transmission automatisée d'un groupe moto-propulseur pour véhicule automobile comprenant une étape d'élaboration d'une consigne de couple à appliquer à la roue, composée de deux composantes statique et dynamique élaborées en fonction de données d'entrée représentatives des caractéristiques du véhicule automobile, de la volonté du conducteur et de l'environnement du véhicule automobile. La composante statique et la composante dynamique de couple, respectivement applicable et appliquée aux roues du véhicule automobile font l'objet d'une adaptation en situation de pente et/ou de charge, en fonction d'une liste de paramètres prédéterminés, ladite adaptation en situation de pente et/ou de charge comprenant les étapes suivantes :
- calculer une composante dynamique de couple brute sans adaptation à une situation de pente et/ou de charge, représentative de la volonté du conducteur en fonction de paramètres d'entrée prédéterminés,
- calculer une composante dynamique de couple adaptée à la situation de pente et/ou de charge à partir de ladite composante dynamique de couple brute,
- déterminer une composante statique de couple brute à partir de ladite composante dynamique de couple,
- calculer une composante statique de couple adaptée à une situation de pente et/ou de charge, à partir de ladite composante statique de couple brute.

Ce procédé permet de générer une consigne de couple aux roues du véhicule automobile (au sens défini précédemment) adaptée à une situation de pente et/ou de charge. La solution proposée permet d'une part que le véhicule automobile dispose d'une réserve de couple suffisante pour accélérer en dépit de la charge et/ou de la pente, et d'autre part que les passagers du véhicule automobile ne ressentent pas les sensations désagréables liées à la perte de frein moteur en situation de descente.

De préférence, on intègre ladite composante statique de couple adaptée à une situation de pente et/ou de charge avec des corrections supplémentaires, fonction de la phase de conduite considérée, afin de délivrer une composante statique de couple optimale.

Selon un mode de mise en oeuvre, on peut adapter la consigne en situation de pente et/ou de charge en fonction d'un signal représentatif de la position de la pédale d'accélération du véhicule automobile.

Le signal représentatif de la pédale d'accélération, du véhicule automobile permet notamment d'évaluer la sportivité du conducteur.

Selon un autre mode de mise en oeuvre, on peut adapter la consigne en situation de pente et/ou de charge en fonction de l'ensemble des couples résistants appliqués au véhicule automobile, mesurés ou estimés au niveau de la roue du véhicule automobile et représentatifs de la charge embarquée par le véhicule automobile et/ou des dénivellations du profil routier.

Selon un autre mode de mise en oeuvre, on peut adapter la consigne en situation de pente et/ou de charge en fonction de la vitesse du véhicule automobile.

Selon un autre mode de mise en oeuvre, on peut adapter la consigne en situation de pente et/ou de charge en fonction du couple maximal instantané applicable aux roues du véhicule automobile.

Selon un autre mode de mise en oeuvre, on peut adapter la consigne en situation de pente et/ou de charge en fonction du régime moteur du véhicule automobile.

De préférence, l'étape de calcul de la composante dynamique de couple adaptée à la situation de pente et/ou de charge peut comprendre les étapes suivantes :
- calculer une variable de pondération permettant d'activer l'adaptation de la consigne en situation de pente et/ou de charge si la composante dynamique de couple brute prend des valeurs positives,
- calculer une variable de pondération pouvant activer ou non l'adaptation de la consigne en situation de pente et/ou de charge en fonction d'un seuil dépendant de la vitesse du véhicule automobile,
- calculer une variable en pourcentage, calibrée en fonction de la correction apportée à la composante dynamique de couple brute positive, du fait de la situation de pente et/ou de charge,
- comparer et intégrer les variables calculées lors des trois étapes de calcul précédentes, avec une liste de paramètres d'entrée prédéterminés comprenant la composante dynamique de couple brute, du couple maximal instantané applicable à la roue, de la vitesse du véhicule automobile et des couples résistants appliqués au véhicule automobile.

Selon un mode de mise en oeuvre, l'étape de calcul de la composante statique de couple adaptée à la situation de pente et/ou de charge peut comprendre les étapes suivantes :
- calculer une variable de pondération pouvant activer ou non l'adaptation de la consigne en situation de pente et/ou de charge en fonction d'un seuil dépendant de la vitesse du véhicule automobile,
- calculer une variable en pourcentage, calibrée en fonction de la correction apportée à la composante statique de couple brute, du fait de la situation de pente et/ou de charge,
- calculer comparer et intégrer les variables calculées lors des deux étapes de calcul précédentes, avec une liste de paramètres d'entrée prédéterminés comprenant la composante statique de couple brute, du couple maximal instantané applicable à la roue, de la vitesse du véhicule automobile et des couples résistants appliqués au véhicule automobile.

L'invention a également pour objet un dispositif de commande d'une transmission automatisée d'un groupe moto-propulseur pour véhicule automobile apte à délivrer un signal de consigne de couple à appliquer aux roues du véhicule automobile comprenant deux composantes statique et dynamique élaborées en fonction de données d'entrée délivrées par un bloc d'entrée, lesdites données d'entrée comprenant une liste enregistrée de paramètres représentatifs de la volonté du conducteur, de l'état du véhicule automobile et de l'environnement du véhicule automobile. Le dispositif comprend avantageusement :
- un premier bloc apte à calculer une composante dynamique de couple sans adaptation à une situation de pente et/ou de charge,
- un deuxième bloc d'adaptation à la situation de pente et/ou de charge délivrant une composante dynamique de couple adaptée à la situation de pente et/ou de charge en fonction d'une première liste de paramètres d'entrée prédéterminés,
- un troisième bloc apte à calculer une composante statique de couple sans adaptation à une situation de pente et/ou de charge,
- un quatrième bloc d'adaptation à la situation de pente et/ou de charge délivrant une composante statique de couple adaptée à la situation de pente et/ou de charge en fonction d'une seconde liste de paramètres d'entrée prédéterminés.

Selon un mode de réalisation, le dispositif de commande peut comprendre des moyens aptes à intégrer la composante statique de couple adaptée à une situation de pente et/ou de charge avec des corrections supplémentaires fonction de la phase de conduite considérée.

Selon un autre mode de réalisation, la première liste de paramètres prédéterminés du deuxième bloc d'adaptation à la situation de pente et/ou de charge peut comprendre des signaux représentatifs de la composante dynamique de couple brute, du couple maximal instantané applicable aux roues du véhicule automobile, de la vitesse du véhicule automobile et des couples résistants appliqués au véhicule automobile.

Selon un autre mode de réalisation, la deuxième liste de paramètres prédéterminés du quatrième bloc d'adaptation à la situation de pente et/ou de charge peut comprendre des signaux représentatifs de la composante statique de couple brute, du couple maximal instantané applicable aux roues du véhicule automobile, de la vitesse du véhicule automobile et des couples résistants appliqués au véhicule automobile.

De préférence, le deuxième bloc d'adaptation à la situation de pente et/ou de charge peut comprendre :
- des moyens aptes à mémoriser une première cartographie capable de délivrer une variable de pondération permettant d'activer l'adaptation de la consigne en situation de pente et/ou de charge si la composante dynamique de couple brute prend des valeurs positives,
- des moyens aptes à mémoriser une deuxième cartographie capable de délivrer une variable de pondération pouvant activer ou non l'adaptation de la consigne en situation de pente et/ou de charge en fonction d'un seuil dépendant de la vitesse du véhicule automobile, (ActionVveh_d)
- des moyens aptes à mémoriser une troisième cartographie capable de délivrer une variable en pourcentage, calibrée en fonction de la correction apportée à la composante dynamique de couple brute positive, du fait de la situation de pente et/ou de charge,
- des moyens de comparaison et d'intégration des variables délivrées par lesdits moyens aptes à mémoriser les cartographies, avec des variables de ladite première liste de paramètres prédéterminés,

De préférence, le quatrième bloc d'adaptation à la situation de pente et/ou de charge peut comprendre :
- des moyens aptes à mémoriser une première cartographie capable de délivrer une variable pouvant activer ou non l'adaptation de la consigne en situation de pente et/ou de charge en fonction d'un seuil dépendant de la vitesse du véhicule automobile,
- des moyens aptes à mémoriser une seconde cartographie délivrant une variable en pourcentage, calibrée en fonction de la correction apportée à la composante statique de couple brute, du fait de la situation de pente et/ou de charge,
- des moyens de comparaison et d'intégration des variables délivrées par lesdits moyens aptes à mémoriser les cartographies, avec des variables de ladite deuxième liste de paramètres prédéterminés.

D'autres avantages et caractéristiques de l'invention apparaîtront à l'examen de la description détaillée d'un mode de réalisation de l'invention nullement limitatif, et des dessins annexés, sur lesquels :
- la figure 1 est un schéma synoptique d'un exemple de réalisation d'un module IVC intégrant l'adaptation de la consigne en phase de pente et/ou de charge,
- la figure 2 représente plus précisément un exemple de réalisation d'un détail du schéma de la figure 1,
- la figure 3 représente plus précisément un exemple de réalisation d'un autre détail du schéma de la figure 1.

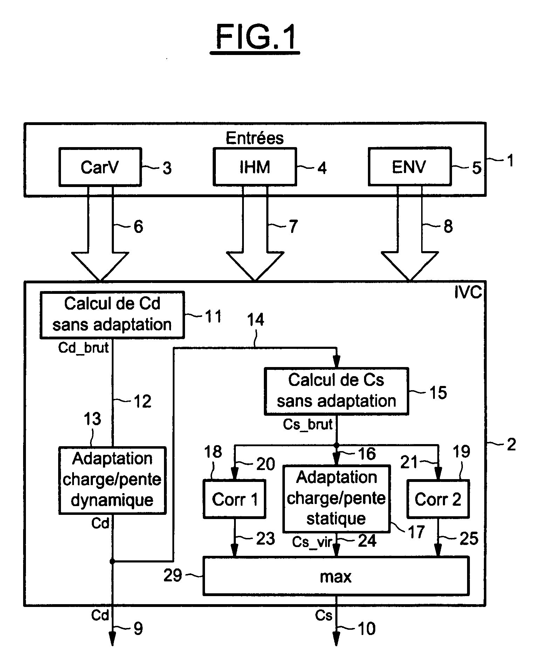

On se réfère à la figure 1. On a représenté sur cette figure l'intégration du dispositif d'adaptation de la consigne de couple à appliquer aux roues du véhicule automobile en phase de pente et/ou de charge, dans la boîte de transmission automatisée du véhicule automobile (non représentée).

Ce dispositif comprend deux blocs 1 et 2, respectivement un bloc d'entrées 1 et un module 2 IVC.

Le bloc d'entrée 1 a pour fonction de délivrer les paramètres d'entrée au module 2 pour le réglage de la consigne de couple à appliquer aux roues du véhicule automobile, en phase de pente et/ou de charge. Le bloc 1 reçoit en entrée des signaux délivrés par des capteurs intégrés au véhicule automobile (non représentés).

Ces données d'entrée, transmises au module 2 par le bloc 1, peuvent être délivrées respectivement à chaque bloc fonctionnel inclus dans le module 2.

Le bloc d'entrée 1 comprend trois modules 3, 4 et 5. Chacun de ces trois modules délivre au module 2 un type de données d'entrée prédéterminé.

Un premier module 3 noté CarV est capable d'élaborer les données concernant les caractéristiques du véhicule automobile. Celles-ci sont programmées et mémorisées dans une mémoire (non représentée) commune au dispositif, par le constructeur, pour caractériser le comportement du véhicule livré à un client.

Un deuxième module 4 noté IHM (interface homme/machine) est capable d'élaborer des données concernant la volonté du conducteur. Ces données interprètent les souhaits du conducteur. Elles peuvent comprendre par exemple des signaux représentatifs de la pédale d'accélération du véhicule automobile ou encore un signal interprétant la sportivité du conducteur.

Un troisième module noté 5 ENV est capable d'élaborer des signaux concernant l'environnement du véhicule automobile. Ces derniers permettent de tenir compte de l'état du véhicule automobile et de sa situation dans l'environnement. Ils comprennent par exemple l'ensemble des couples résistants appliqués au véhicule automobile représentatifs de la charge embarquée par le véhicule automobile et/ou des dénivellations du profil routier. Par convention, la variable représentative de l'ensemble de ces couples résistants est positive lorsque le véhicule automobile se trouve en situation de montée ou en situation de charge et négative lorsque le véhicule automobile se trouve en situation de descente.

Les signaux délivrés par les trois modules 3, 4 et 5 sont élaborés à partir de signaux provenant de capteurs intégrés au véhicule automobile (non représentés).

Ces trois modules 3, 4 et 5 sont respectivement connectés au module 2 IVC par l'intermédiaire des connexions 6, 7 et 8.

Le module 2 IVC, décrit dans le document FR-A-2 827 339, au nom de la Demanderesse, représente un bloc apte à générer une consigne de couple à appliquer aux roues du véhicule automobile en interprétant la volonté du conducteur.

Le module 2 reçoit en entrée les paramètres élaborés par le bloc 1 et délivre en sortie les composantes dynamique Cd (ou consigne de couple dynamique) et statique Cs (ou consigne de couple statique) de la consigne de couple à appliquer aux roues du véhicule automobile. Les deux consignes sont respectivement émises par l'intermédiaire des connexions 9 et 10. Les consignes Cd et Cs sont des cibles destinées à être utilisées de manière à atteindre, entre autres, un régime moteur optimal.

La consigne de couple dynamique Cd est la valeur du couple que le conducteur souhaite voir réalisée instantanément. La consigne de couple statique Cs se définit comme le couple dynamique anticipé que le conducteur pourrait demander et que le groupe motopropulseur doit rendre immédiatement disponible au niveau des roues du véhicule automobile. La consigne Cs évolue lentement. En effet, elle n'a pas pour but de répondre à une demande immédiate du conducteur. Elle doit être le reflet d'une tendance imposée par le comportement du conducteur depuis une période prédéterminée. En d'autres termes, le couple Cs correspond à la valeur de couple appliqué aux roues du véhicule automobile que le conducteur souhaiterait obtenir en rechargeant la pédale d'accélération du véhicule automobile.

Le module 2 comprend au moins quatre blocs fonctionnels 11, 13, 15 et 17.

Le premier bloc fonctionnel 11 (Calcul de Cd sans Adaptation) est un bloc apte à calculer une composante dynamique de couple brute, notée Cd_brut, sans adaptation à une situation de pente et/ou de charge. Cette consigne Cd_brut est calculée à partir d'un signal représentatif de la position de la pédale d'accélération, du régime moteur du véhicule automobile, de l'ensemble des couples résistants appliqués au véhicule automobile et la vitesse du véhicule automobile.

Le bloc 11 délivre, par une connexion 12, la variable Cd_brut au deuxième bloc fonctionnel 13 (Adaptation charge/pente dynamique) du module 2. Ce bloc permet d'adapter la composante dynamique de couple à une situation de pente et/ou de charge. Le bloc 13, qui sera vu plus en détail ci-après, délivre la consigne de couple dynamique adaptée Cd par une connexion 9.

Le troisième bloc fonctionnel est un bloc 15 (Calcul de Cs sans adaptation) qui est capable de calculer une consigne de couple statique Cs_brut sans adaptation à la situation de pente et/ou de charge. La consigne Cs_brut est élaborée à partir du couple dynamique Cd, issu du bloc 13 et transmise par la connexion 14. En outre, la consigne Cs_brut est calculée en fonction de paramètres comme la sportivité du conducteur par exemple.

La consigne Cs_brut est délivrée, par l'intermédiaire de la connexion 16 au quatrième bloc fonctionnel 17 intégré au module 2. Le bloc 17 (Adaptation charge/pente statique) a pour fonction d'élaborer, à partir de la consigne Cs_brut, une consigne de couple à appliquer aux roues du véhicule automobile, adaptée à la situation de pente et/ou de charge Cs_charge. La consigne Cs_charge délivrée par le bloc 17 donne la possibilité d'améliorer le point de fonctionnement du véhicule automobile. En effet, le point de fonctionnement va permettre de pré-positionner la valeur du régime moteur à une valeur anticipant la volonté du conducteur. Le bloc 17 sera décrit plus en détail ci-après.

Parallèlement à l'adaptation à la situation de pente et ou de charge, la consigne Cs_brut peut subir d'autres corrections, par exemple en situation de freinage ou de virage. Ces corrections supplémentaires sont effectuées respectivement par les deux blocs correctifs 18 Corr1 et 19 Corr2. La consigne Cs_brut est transmise aux blocs 18 et 19 par les connexions respectives 20 et 21.

Les trois blocs 17, 18 et 19 délivrent leurs consignes de sortie au bloc 22 noté max. Le bloc 18 délivre sa consigne au bloc 22 par une connexion 23, le bloc 17 par une connexion 24 et le bloc 19 par une connexion 25.

Le bloc 22, placé en sortie des blocs 17, 18 et 19, arbitre les différentes corrections opérées par ces trois blocs. En effet, la consigne Cs peut comprendre à la fois une adaptation en pente et/ou en charge et une adaptation en freinage par exemple. Le bloc 22 délivre alors en sortie une consigne de sortie Cs intégrant les différentes corrections apportées.

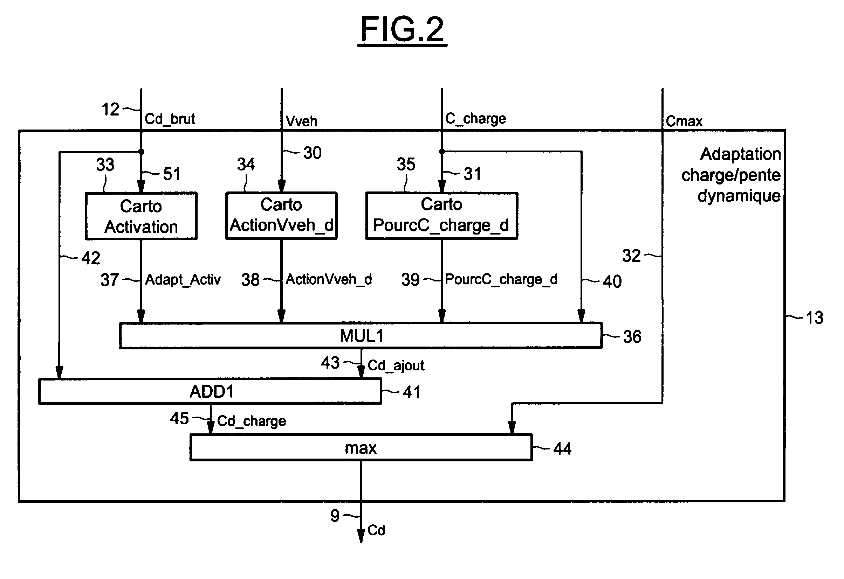

On se réfère maintenant à la figure 2. Cette figure détaille le bloc 13 réalisant l'adaptation de la consigne Cd_brut en phase de pente et/ou de charge.

Le bloc 13 reçoit différents paramètres tels que la consigne Cd_brut transmise par la connexion 12 et les paramètres d'entrée, délivré par le bloc 1 de la figure 1, comme la vitesse du véhicule automobile, notée Vveh, transmise par la connexion 30, l'ensemble des couples résistants appliqués au véhicule automobile noté C_charge, transmis par la connexion 31 et le couple maximum applicable aux roues du véhicule automobile noté Cmax transmis par la connexion 32.

Le paramètre C_charge regroupe l'ensemble des couples résistants mesurés au niveau de la roue et dus soit à la charge embarquée à bord du véhicule automobile soit aux dénivellations du profil routier.

Par ailleurs, la composante Cmax est le couple maximum applicable aux roues du véhicule automobile et que le groupe moto-propulseur peut fournir aux roues du véhicule automobile. Cette composante Cmax est produite à l'aide d'une table enregistrée (non représentée) qui est adressée, dans un mode préféré de réalisation, en fonction de la vitesse de rotation mesurée à la roue du véhicule automobile. La valeur Cmax évolue donc dynamiquement en fonction de la vitesse du véhicule automobile.

Le bloc 13 comprend plusieurs blocs fonctionnels permettant la construction de la consigne Cd.

En premier lieu, le bloc 13 comprend une première cartographie 33 (Carto Activation) qui délivre une variable de pondération Adapt_Activ, en fonction de la consigne Cd_brut. La variable Adapt_Activ est nulle si la consigne Cd_brut est négative, prend des valeurs positives si la consigne Cd_brut est positive, ce qui permet de désactiver la correction si le conducteur du véhicule automobile n'active pas la pédale d'accélération du véhicule automobile.

Une deuxième cartographie 34 (Carto ActionVveh_d) est placée parallèlement à la cartographie 33, et reçoit en entrée la vitesse du véhicule automobile Vveh par la connexion 30. La cartographie 34 a pour fonction d'élaborer une pondération notée ActionVveh_d, prenant des valeurs entre « 0 » et « 1 » et permettant d'inhiber la fonction. Le signal ActionVveh_d, délivré par la cartographie 34, permet d'annuler la correction, pour le couple dynamique, en phase de pente et/ou de charge à partir d'un seuil adapté, déterminé par la cartographie 34. Le signal ActionVveh_d assure alors une disparition progressive de la correction en fonction de la variation de la vitesse du véhicule automobile.

Une troisième cartographie 35 (Carto PourcC_charge_d) située parallèlement à la cartographie 34 reçoit en entrée, par la connexion 31, le paramètre C_charge. La cartographie 35 délivre en sortie une variable notée PourcC_charge_d en fonction du paramètre C_charge. La cartographie 35 est définie de la manière suivante : pour les valeurs négatives de C_charge, PourcC_charge_d prend des valeurs nulles (ce qui permet d'annuler la correction lorsque le véhicule automobile est en phase de descente), et pour les valeurs positives de C_charge, PourcC_charge_d prend des valeurs comprises entre « 0 » et « 1 » afin de calibrer la correction apportée.

Les signaux Adapt_Activ, ActionVveh_d et PourcC_charge_d, sont délivrés à un multiplieur 36 MUL1 par l'intermédiaire des connexions respectives 37, 38 et 39. Le multiplieur 36 reçoit également en entrée la composante C_charge par une connexion 40. Le multiplieur génère une variable Cd_ajout en multipliant la variable PourcC_charge_d par C_charge, la multiplication étant pondérée par Adapt_Activ et ActionVveh_d. La variable Cd_ajout représente la quantité de couple dynamique appliqué à la roue (au sens défini précédemment) que l'on souhaite ajouter à Cd_brut afin de corriger l'effet de montée et/ou de charge.

Un additionneur 41 ADD, situé en sortie du multiplieur 36, a pour fonction d'ajouter à la consigne Cd_brut, transmise à l'additionneur 41 par une connexion 42, la quantité de couple dynamique appliqué à la roue supplémentaire, Cd_ajout, transmise à l'additionneur 41 par une connexion 43.

Un bloc max 44 est situé en sortie de l'additionneur 41. Il reçoit en entrée la variable résultante notée Cd_charge, délivrée par l'additionneur 41 au bloc 44 par l'intermédiaire d'une connexion 45. Le bloc 44 a pour rôle de saturer la variable Cd_charge à la valeur courante Cmax, que le bloc 44 reçoit également en entrée par la connexion 32. Le bloc 44 délivre en sortie, par la connexion 9, la consigne Cd réellement appliquée.

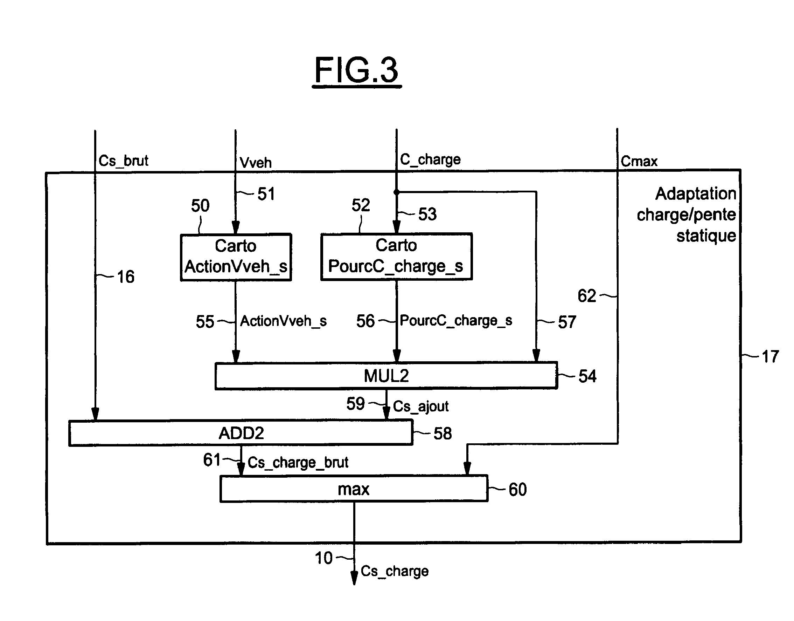

On se réfère maintenant à la figure 3 qui détaille le bloc 17 représenté sur la figure 1.

Le bloc 17 comprend notamment deux blocs fonctionnels aptes à adapter la consigne Cs_brut en situation de pente et/ou de charge.

En premier lieu, le bloc 17 comprend une première cartographie 50 (Carto ActionVveh_s) qui reçoit en entrée la vitesse du véhicule automobile Vveh par la connexion 51. La cartographie 50 à pour fonction d'élaborer une pondération notée ActionVveh_s, prenant des valeurs entre « 0 » et « 1 » permettant de n'activer la correction que lorsque la vitesse du véhicule automobile est inférieure à un seuil prédéterminé. Le signal ActionVveh_s, délivré par la cartographie 50, permet d'annuler la correction, pour le couple statique, en phase de pente et/ou de charge à partir d'un seuil adapté, déterminé par la cartographie 50. Le signal ActionVveh_s assure alors une disparition progressive de la correction en fonction de la variation de la vitesse du véhicule automobile Vveh.

Le bloc 17 comprend une seconde cartographie 52 (Carto PourcC_charge_s) recevant en entrée, par une connexion 53, la variable d'entrée C_charge. La cartographie 52 délivre en sortie une variable PourcC_charge_s. La cartographie 52 est définie de la manière suivante : pour des valeurs négatives de C_charge, la variable PourcC_charge_s prend des valeurs comprises entre -1 et 0 et pour les valeurs positives de C_charge, PourcC_charge_s prend des valeurs comprises entre 0 et 1. Dans les deux cas, les valeurs prises par PourcC_charge_s permettent de calibrer l'effet de la correction.

Les signaux ActionVveh_s et PourcC_charge_s, sont délivrés à un multiplieur 54 MUL2 par l'intermédiaire des connexions respectives 55, et 56. Le multiplieur 54 reçoit également en entrée la composante C_charge par une connexion 57. Le multiplieur génère une variable Cs_ajout en multipliant la variable PourcC_charge_s par C_charge, la multiplication étant pondérée par ActionVveh_s. La variable Cs_ajout représente la quantité de couple statique applicable à la roue (au sens défini précédemment) que l'on souhaite ajouter à Cs_brut afin de corriger l'effet de pente et/ou de charge.

Un additionneur 58 ADD2, situé en sortie du multiplieur 54, a pour fonction d'ajouter à la consigne Cs_brut, transmise à l'additionneur 58 par la connexion 16, la quantité de couple statique appliqué à la roue supplémentaire, Cs_ajout (qui par construction ne peut être que positif ou nul). La variable Cs_ajout est transmise à l'additionneur 58 par une connexion 59.

Un bloc 60 max est situé en sortie de l'additionneur 58. Il reçoit en entrée la variable résultante notée Cs_charge_brut délivrée par l'additionneur 58 au bloc 60, par l'intermédiaire d'une connexion 61. Le bloc 60 a pour rôle de saturer la variable Cs_charge_brut à la valeur courante Cmax, que le bloc 60 reçoit également en entrée par la connexion 62. Le bloc 60 délivre en sortie, par la connexion 10, la consigne Cs_charge, adaptée à une situation de pente et/ou de charge.

Les composantes dynamique Cd et statique Cs de couple ainsi augmentées, respectivement par les composantes Cd_ajout et Cs_ajout, apportent plusieurs avantages en situation de pente et/ou de charge. Elles permettent de pré-positionner le groupe moto-propulseur sur un point de fonctionnement, offrant ainsi une plus grande réserve de couple applicable instantanément à la roue de véhicule automobile, ce qui permet au véhicule automobile d'accélérer plus rapidement en situation de côte ou en cas d'une charge embarquée à bord du véhicule automobile. En effet, pour obtenir la réserve de couple applicable à la roue de véhicule automobile, le groupe moto-propulseur se positionne sur un point de fonctionnement en régime moteur (élaboré en fonction du couple à appliquer à la roue de véhicule automobile) supérieur à ce qu'il aurait été sans cette demande augmentée.

Par ailleurs, en situation de descente, le groupe moto-propulseur peut se positionner sur un point de fonctionnement en régime moteur supérieur à la valeur d'une consigne sans adaptation. Il en résulte un potentiel de frein moteur accru.

## Revendications

1. Procédé de commande d'une transmission automatisée d'un groupe moto-propulseur pour véhicule automobile comprenant une étape d'élaboration d'une consigne de couple à appliquer à la roue, composée de deux composantes statique (Cs) et dynamique (Cd) élaborées en fonction de données d'entrée représentatives des caractéristiques du véhicule automobile, de la volonté du conducteur et de l'environnement du véhicule automobile, **caractérisé par le fait que** la composante statique (Cs) et la composante dynamique (Cd) de couple respectivement applicable et appliquée aux roues du véhicule automobile font l'objet d'une adaptation en situation de pente et/ou de charge, en fonction d'une liste de paramètres prédéterminés, ladite adaptation en situation de pente et/ou de charge comprenant les étapes suivantes :
- calculer une composante dynamique de couple brute (Cd_brut) sans adaptation à une situation de pente et/ou de charge, représentative de la volonté du conducteur en fonction de paramètres d'entrée prédéterminés,
- calculer une composante dynamique de couple (Cd) adaptée à la situation de pente et/ou de charge à partir de ladite composante dynamique de couple brute (Cd_brut),
- déterminer une composante statique de couple brute (Cs_brut) à partir de ladite composante dynamique de couple (Cd),
- calculer une composante statique de couple (Cs_charge) adaptée à une situation de pente et/ou de charge, à partir de ladite composante statique de couple brute (Cs_brut).

2. Procédé selon la revendication 1, **caractérisé par le fait que** l'on intègre ladite composante statique de couple (Cs_charge) adaptée à une situation de pente et/ou de charge avec des corrections supplémentaires, fonction de la phase de conduite considérée, afin de délivrer une composante statique de couple optimale (Cs).

3. Procédé selon l'une quelconque des revendications précédentes, **caractérisé par le fait que** l'on adapte la consigne en situation de pente et/ou de charge en fonction d'un signal représentatif de la position de la pédale d'accélération du véhicule automobile.

4. Procédé selon l'une quelconque des revendications 1 à 3, **caractérisé par le fait que** l'on adapte la consigne en situation de pente et/ou de charge en fonction de l'ensemble des couples résistants (C_charge) appliqués au véhicule automobile, mesurés ou estimés au niveau de la roue du véhicule automobile et représentatifs de la charge embarquée par le véhicule automobile et/ou des dénivellations du profil routier.

5. Procédé selon l'une quelconque des revendications 1 à 4, **caractérisé par le fait que** l'on adapte la consigne en situation de pente et/ou de charge en fonction de la vitesse du véhicule automobile (Vveh).

6. Procédé selon l'une quelconque des revendications 1 à 5, **caractérisé par le fait que** l'on adapte la consigne en situation de pente et/ou de charge en fonction du couple maximal instantané (Cmax) applicable aux roues du véhicule automobile.

7. Procédé selon l'une quelconque des revendications 1 à 6, **caractérisé par le fait que** l'on adapte la consigne en situation de pente et/ou de charge en fonction du régime moteur du véhicule automobile.

8. Procédé selon l'une quelconque des revendications précédentes, **caractérisé par le fait que** l'étape de calcul de la composante dynamique (Cd) de couple adaptée à la situation de pente et/ou de charge comprend les étapes suivantes :
- calculer une variable de pondération (Adapt_Activ) permettant d'activer l'adaptation de la consigne en situation de pente et/ou de charge si la composante dynamique de couple brute(Cd_brut) prend des valeurs positives,
- calculer une variable de pondération (ActionVveh_d) pouvant activer ou non l'adaptation de la consigne en situation de pente et/ou de charge en fonction d'un seuil dépendant de la vitesse du véhicule automobile,
- calculer une variable en pourcentage (PourcC_charge_d), calibrée en fonction de la correction apportée à la composante dynamique de couple brute (Cd_brut) positive, du fait de la situation de pente et/ou de charge,
- comparer et intégrer les variables calculées lors des trois étapes de calcul précédentes, avec une liste de paramètres d'entrée prédéterminés comprenant la composante dynamique de couple brute (Cd_brut), du couple maximal instantané (Cmax) applicable à la roue, de la vitesse du véhicule automobile (Vveh) et des couples résistants appliqués au véhicule automobile (C_charge).

9. Procédé selon l'une quelconque des revendications précédentes, **caractérisé par le fait que** l'étape de calcul de la composante statique de couple (Cs) adaptée à la situation de pente et/ou de charge comprend les étapes suivantes :
- calculer une variable de pondération (ActionVveh_s) pouvant activer ou non l'adaptation de la consigne en situation de pente et/ou de charge en fonction d'un seuil dépendant de la vitesse du véhicule automobile (Vveh),
- calculer une variable en pourcentage (PourcC_charge_s), calibrée en fonction de la correction apportée à la composante statique de couple brute (Cs_brut), du fait de la situation de pente et/ou de charge,
- calculer comparer et intégrer les variables calculées lors des deux étapes de calcul précédentes, avec une liste de paramètres d'entrée prédéterminés comprenant la composante statique de couple brute (Cs_brut), du couple maximal instantané (Cmax) applicable à la roue, de la vitesse du véhicule automobile (Vveh) et des couples résistants appliqués au véhicule automobile (C_charge).

10. Dispositif de commande d'une transmission automatisée d'un groupe moto-propulseur pour véhicule automobile apte à délivrer un signal de consigne de couple à appliquer aux roues du véhicule automobile comprenant deux composantes statique (Cs) et dynamique (Cd) élaborées en fonction de données d'entrée délivrées par un bloc d'entrée (1), lesdites données d'entrée comprenant une liste enregistrée de paramètres représentatifs de la volonté du conducteur, de l'état du véhicule automobile et de l'environnement du véhicule automobile, **caractérisé en ce qu'**il comprend :
- un premier bloc (11) apte à calculer une composante dynamique (Cd_brut) de couple sans adaptation à une situation de pente et/ou de charge,
- un deuxième bloc (13) d'adaptation à la situation de pente et/ou de charge délivrant une composante dynamique de couple (Cd) adaptée à la situation de pente et/ou de charge en fonction d'une première liste de paramètres d'entrée prédéterminés,
- un troisième bloc (15) apte à calculer une composante statique (Cs_brut) de couple sans adaptation à une situation de pente et/ou de charge,
- un quatrième bloc (17) d'adaptation à la situation de pente et/ou de charge délivrant une composante statique (Cs_charge) de couple adaptée à la situation de pente et/ou de charge en fonction d'une seconde liste de paramètres d'entrée prédéterminés.

11. Dispositif de commande selon la revendication 10, **caractérisé par le fait qu'**il comprend des moyens aptes à intégrer la composante statique de couple (Cs) adaptée à une situation de pente et/ou de charge avec des corrections supplémentaires fonction de la phase de conduite considérée.

12. Dispositif de commande selon l'une quelconque des revendications 10 ou 11, **caractérisé par le fait que** la première liste de paramètres prédéterminés du deuxième bloc (13) d'adaptation à la situation de pente et/ou de charge comprend des signaux représentatifs de la composante dynamique de couple brute (Cd_brut), du couple maximal instantané (Cmax) applicable aux roues du véhicule automobile, de la vitesse du véhicule automobile (Vveh) et des couples résistants (C_charge) appliqués au véhicule automobile.

13. Dispositif de commande selon l'une quelconque des revendications 10 à 12, **caractérisé par le fait que** la deuxième liste de paramètres prédéterminés du quatrième bloc d'adaptation (17) à la situation de pente et/ou de charge comprend des signaux représentatifs de la composante statique de couple brute (Cs_brut), du couple maximal instantané (Cmax) applicable aux roues du véhicule automobile, de la vitesse du véhicule automobile et des couples résistants (C_charge) appliqués au véhicule automobile.

14. Dispositif de commande selon l'une quelconque des revendications 10 à 13, **caractérisé par le fait que** le deuxième bloc (13) d'adaptation à la situation de pente et/ou de charge comprend :
- des moyens aptes à mémoriser une première cartographie (33) capable de délivrer une variable de pondération (Adapt_Activ) permettant d'activer l'adaptation de la consigne en situation de pente et/ou de charge si la composante dynamique de couple brute (Cd_brut) prend des valeurs positives,
- des moyens aptes à mémoriser une deuxième cartographie (34) capable de délivrer une variable de pondération (ActionVveh_d) pouvant activer ou non l'adaptation de la consigne en situation de pente et/ou de charge en fonction d'un seuil dépendant de la vitesse du véhicule automobile,
- des moyens aptes à mémoriser une troisième cartographie (35) capable de délivrer une variable en pourcentage, calibrée (PourcC_charge_d) en fonction de la correction apportée à la composante dynamique (Cd_brut) de couple brute positive, du fait de la situation de pente et/ou de charge,
- des moyens de comparaison et d'intégration des variables délivrées par lesdits moyens aptes à mémoriser les cartographies, avec des variables de ladite première liste de paramètres prédéterminés.

15. Dispositif de commande selon l'une quelconque des revendications 10 à 14, **caractérisé par le fait que** le quatrième bloc d'adaptation à la situation de pente et/ou de charge comprend :
- des moyens aptes à mémoriser une première cartographie (50) capable de délivrer une variable (ActionVveh_s) pouvant activer ou non l'adaptation de la consigne en situation de pente et/ou de charge en fonction d'un seuil dépendant de la vitesse (Vveh) du véhicule automobile,
- des moyens aptes à mémoriser une seconde cartographie (52) délivrant une variable en pourcentage (PourcC_charge_s), calibrée en fonction de la correction apportée à la composante statique de couple brute (Cs_brut), du fait de la situation de pente et/ou de charge,
- des moyens de comparaison et d'intégration des variables délivrées par lesdits moyens aptes à mémoriser les cartographies, avec des variables de ladite deuxième liste de paramètres prédéterminés.

## Claims

1. Method of controlling an automated transmission of a power train for motor vehicle comprising a step of formulating a torque setpoint to be applied to the wheel, composed of two components, static (Cs) and dynamic (Cd), formulated as a function of input data representative of the characteristics of the motor vehicle, of the desire of the driver and of the environment of the motor vehicle, **characterized by** the fact that the static component (Cs) and the dynamic component (Cd) of torque respectively applicable and applied to the wheels of the motor vehicle form the subject of an adaptation to a slope and/or load situation, as a function of a list of predetermined parameters, said adaptation to a slope and/or load situation comprising the following steps:
- calculating a dynamic component of raw torque (Cd_raw) without adaptation to a slope and/or load situation, representative of the desire of the driver as a function of predetermined input parameters,
- calculating a dynamic torque component (Cd) adapted to the slope and/or load situation on the basis of said dynamic component of raw torque (Cd_raw),
- determining a static component of raw torque (Cs_raw) on the basis of said dynamic torque component (Cd),
- calculating a static torque component (Cs_load) adapted to a slope and/or load situation, on the basis of said static component of raw torque (Cs_raw).

2. Method according to Claim 1, **characterized by** the fact that said static torque component (Cs_load) adapted to a slope and/or load situation is integrated with additional corrections, dependent on the driving phase considered, so as to deliver an optimal static torque component (Cs).

3. Method according to any one of the preceding claims, **characterized by** the fact that the setpoint is adapted to a slope and/or load situation as a function of a signal representative of the position of the accelerator pedal of the motor vehicle.

4. Method according to any one of Claims 1 to 3, **characterized by** the fact that the setpoint is adapted to a slope and/or load situation as a function of the whole set of resistive torques (C_load) applied to the motor vehicle, measured or estimated at the wheel of the motor vehicle and representative of the load onboard the motor vehicle and/or of the unevenness of the road profile.

5. Method according to any one of Claims 1 to 4, **characterized by** the fact that the setpoint is adapted to a slope and/or load situation as a function of the speed of the motor vehicle (Vveh).

6. Method according to any one of Claims 1 to 5, **characterized by** the fact that the setpoint is adapted to a slope and/or load situation as a function of the instantaneous maximum torque (Cmax) applicable to the wheels of the motor vehicle.

7. Method according to any one of Claims 1 to 6, **characterized by** the fact that the setpoint is adapted to a slope and/or load situation as a function of the engine revs of the motor vehicle.

8. Method according to any one of the preceding claims, **characterized by** the fact that the step of calculating the dynamic component (Cd) of torque adapted to the slope and/or load situation comprises the following steps:
- calculating a weighting variable (Adapt_Activ) making it possible to activate the adaptation of the setpoint to a slope and/or load situation if the dynamic component of raw torque (Cd_raw) takes positive values,
- calculating a weighting variable (ActionVveh_d) that may or may not activate the adaptation of the setpoint to a slope and/or load situation as a function of a threshold dependent on the speed of the motor vehicle,
- calculating a percentage variable (PercC_load_d), calibrated as a function of the correction made to the positive dynamic component of raw torque (Cd_raw), on account of the slope and/or load situation,
- comparing and integrating the variables calculated during the preceding three calculation steps, with a list of predetermined input parameters comprising the dynamic component of raw torque (Cd_raw), the instantaneous maximum torque (Cmax) applicable to the wheel, the speed of the motor vehicle (Vveh) and the resistive torques applied to the motor vehicle (C_load).

9. Method according to any one of the preceding claims, **characterized by** the fact that the step of calculating the static torque component (Cs) adapted to the slope and/or load situation comprises the following steps:
- calculating a weighting variable (ActionVveh_s) that may or may not activate the adaptation of the setpoint to a slope and/or load situation as a function of a threshold dependent on the speed of the motor vehicle (Vveh),
- calculating a percentage variable (PercC_load_s), calibrated as a function of the correction made to the static component of raw torque (Cs_raw), on account of the slope and/or load situation,
- comparing and integrating the variables calculated during the preceding two calculation steps, with a list of predetermined input parameters comprising the static component of raw torque (Cs_raw), of the instantaneous maximum torque (Cmax) applicable to the wheel, of the speed of the motor vehicle (Vveh) and of the resistive torques applied to the motor vehicle (C_load).

10. Device for controlling an automated transmission of a power train for motor vehicle able to deliver a torque setpoint signal to be applied to the wheels of the motor vehicle comprising two components, static (Cs) and dynamic (Cd), formulated as a function of input data delivered by an input block (1), said input data comprising a recorded list of parameters representative of the desire of the driver, of the state of the motor vehicle and of the environment of the motor vehicle, **characterized in that** it comprises:
- a first block (11) able to calculate a dynamic component (Cd_raw) of torque without adaptation to a slope and/or load situation,
- a second block (13) for adaptation to the slope and/or load situation delivering a dynamic torque component (Cd) adapted to the slope and/or load situation as a function of a first list of predetermined input parameters,
- a third block (15) able to calculate a static component (Cs_raw) of torque without adaptation to a slope and/or load situation,
- a fourth block (17) for adaptation to the slope and/or load situation delivering a static component (Cs_load) of torque adapted to the slope and/or load situation as a function of a second list of predetermined input parameters.

11. Control device according to Claim 10, **characterized by** the fact that it comprises means able to integrate the static torque component (Cs) adapted to a slope and/or load situation with additional corrections dependent on the driving phase considered.

12. Control device according to any one of Claims 10 or 11, **characterized by** the fact that the first list of predetermined parameters of the second block (13) for adaptation to the slope and/or load situation comprises signals representative of the dynamic component of raw torque (Cd_raw), of the instantaneous maximum torque (Cmax) applicable to the wheels of the motor vehicle, of the speed of the motor vehicle (Vveh) and of the resistive torques (C_load) applied to the motor vehicle.

13. Control device according to any one of Claims 10 to 12, **characterized by** the fact that the second list of predetermined parameters of the fourth block (17) for adaptation to the slope and/or load situation comprises signals representative of the static component of raw torque (Cs_raw), of the instantaneous maximum torque (Cmax) applicable to the wheels of the motor vehicle, of the speed of the motor vehicle and of the resistive torques (C_load) applied to the motor vehicle.

14. Control device according to any one of Claims 10 to 13, **characterized by** the fact that the second block (13) for adaptation to the slope and/or load situation comprises:
- means able to store a first mapping (33) capable of delivering a weighting variable (Adapt_Activ) making it possible to activate the adaptation of the setpoint to a slope and/or load situation if the dynamic component of raw torque (Cd_raw) takes positive values,
- means able to store a second mapping (34) capable of delivering a weighting variable (ActionVveh_d) that may or may not activate the adaptation of the setpoint to a slope and/or load situation as a function of a threshold dependent on the speed of the motor vehicle,
- means able to store a third mapping (35) capable of delivering a percentage variable, calibrated (PercC_load_d) as a function of the correction made to the positive dynamic component (Cd_raw) of raw torque, on account of the slope and/or load situation,
- means for comparing and for integrating the variables delivered by said means able to store the mappings, with variables of said first list of predetermined parameters.

15. Control device according to any one of Claims 10 to 14, **characterized by** the fact that the fourth block for adaptation to the slope and/or load situation comprises:
- means able to store a first mapping (50) capable of delivering a variable (ActionVveh_s) that may or may not activate the adaptation of the setpoint to a slope and/or load situation as a function of a threshold dependent on the speed (Vveh) of the motor vehicle,
- means able to store a second mapping (52) delivering a percentage variable (PercC_load_s), calibrated as a function of the correction made to the static component of raw torque (Cs_raw), on account of the slope and/or load situation,
- means for comparing and for integrating the variables delivered by said means able to store the mappings, with variables of said second list of predetermined parameters.

## Patentansprüche

1. Verfahren zur Steuerung eines automatisierten Getriebes einer Antriebseinheit für ein Kraftfahrzeug, das einen Schritt der Erarbeitung eines an das Rad anzuwendenden Drehmoment-Sollwerts aufweist, das aus zwei Komponenten, einer statischen (Cs) und einer dynamischen (Cd), besteht, die in Abhängigkeit von Eingangsdaten erarbeitet werden, die für die Merkmale des Kraftfahrzeugs, den Willen des Fahrers und die Umgebung des Kraftfahrzeugs repräsentativ sind, **dadurch gekennzeichnet, dass** die statische Drehmomentkomponente (Cs) und die dynamische Drehmomentkomponente (Cd), die an die Räder des Kraftfahrzeugs anwendbar ist bzw. angewendet wird, in Abhängigkeit von einer Liste vorbestimmter Parameter Gegenstand einer Anpassung in einer Gefälle- und/oder Lastsituation sind, wobei die Anpassung in einer Gefälle- und/oder Lastsituation die folgenden Schritte aufweist:
- Berechnung einer unbearbeiteten dynamischen Drehmomentkomponente (Cd_brut) ohne Anpassung an eine Gefälle- und/oder Lastsituation, die für den Willen des Fahrers in Abhängigkeit von vorbestimmten Parametern repräsentativ ist,
- Berechnung einer an die Gefälle- und/oder Lastsituation angepassten dynamischen Drehmomentkomponente (Cd) ausgehend von der unbearbeiteten dynamischen Drehmomentkomponente (Cd_brut),
- Bestimmung einer unbearbeiteten statischen Drehmomentkomponente (Cs_brut) ausgehend von der dynamischen Drehmomentkomponente (Cd),
- Berechnung einer an eine Gefälle- und/oder Lastsituation angepassten statischen Drehmomentkomponente (Cs_charge) ausgehend von der unbearbeiteten statischen Drehmomentkomponente (Cs_brut).

2. Verfahren nach Anspruch 1, **dadurch gekennzeichnet, dass** die an eine Gefälle- und/oder Lastsituation angepasste statische Drehmomentkomponente (Cs_charge) mit von der betrachteten Fahrphase abhängigen, zusätzlichen Korrekturen integriert wird, um eine optimale statische Drehmomentkomponente (Cs) zu liefern.

3. Verfahren nach einem der vorhergehenden Ansprüche, **dadurch gekennzeichnet, dass** der Sollwert in einer Gefälle- und/oder Lastsituation in Abhängigkeit von einem Signal angepasst wird, das für die Position des Gaspedals des Kraftfahrzeugs repräsentativ ist.

4. Verfahren nach einem der Ansprüche 1 bis 3, **dadurch gekennzeichnet, dass** der Sollwert in einer Gefälle- und/oder Lastsituation in Abhängigkeit von der Gesamtheit der Widerstandsmomente (C_charge) angepasst wird, die an das Kraftfahrzeug angewendet werden, gemessen oder geschätzt in Höhe des Rads des Kraftfahrzeugs und repräsentativ für die an Bord des Kraftfahrzeugs befindliche Last und/oder die Höhenunterschiede des Straßenprofils.

5. Verfahren nach einem der Ansprüche 1 bis 4, **dadurch gekennzeichnet, dass** der Sollwert in einer Gefälle- und/oder Lastsituation in Abhängigkeit von der Geschwindigkeit des Kraftfahrzeugs (Vveh) angepasst wird.

6. Verfahren nach einem der Ansprüche 1 bis 5, **dadurch gekennzeichnet, dass** der Sollwert in einer Gefälle- und/oder Lastsituation in Abhängigkeit vom maximalen augenblicklichen Drehmoment (Cmax) angepasst wird, das an die Räder des Kraftfahrzeugs anwendbar ist.

7. Verfahren nach einem der Ansprüche 1 bis 6, **dadurch gekennzeichnet, dass** der Sollwert in einer Gefälle- und/oder Lastsituation in Abhängigkeit von der Motordrehzahl des Kraftfahrzeugs angepasst wird.

8. Verfahren nach einem der vorhergehenden Ansprüche, **dadurch gekennzeichnet, dass** der Schritt der Berechnung der an die Gefälle- und/oder Lastsituation angepassten dynamischen Drehmomentkomponente (Cd) die folgenden Schritte aufweist:
- Berechnung einer Gewichtungsvariablen (Adapt_Activ), die es ermöglicht, die Anpassung des Sollwerts in einer Gefälle- und/oder Lastsituation zu aktivieren, wenn die unbearbeitete dynamische Drehmomentkomponente (Cd_brut) positive Werte annimmt,
- Berechnung einer Gewichtungsvariablen (ActionVveh_d), die die Anpassung des Sollwerts in einer Gefälle- und/oder Lastsituation in Abhängigkeit von einem Schwellwert aktivieren kann oder nicht, der von der Geschwindigkeit des Kraftfahrzeugs abhängt,
- Berechnung einer Prozentsatzvariablen (PourcC_charge_d), die in Abhängigkeit von der Korrektur kalibriert ist, die an der positiven unbearbeiteten dynamischen Drehmomentkomponente (Cd_brut) aufgrund der Gefälle- und/oder Lastsituation vorgenommen wird,
- Vergleich und Integration der in den drei vorhergehenden Berechnungsschritten berechneten Variablen mit einer Liste vorbestimmter Eingangsparameter, die die unbearbeitete dynamische Drehmomentkomponente (Cd_brut), das an das Rad anwendbare maximale augenblickliche Drehmoment (Cmax), die Geschwindigkeit des Kraftfahrzeugs (Vveh) und die an das Kraftfahrzeug angewendeten Widerstandsmomente (C_charge) enthalten.

9. Verfahren nach einem der vorhergehenden Ansprüche, **dadurch gekennzeichnet, dass** der Schritt der Berechnung der an die Gefälle- und/oder Lastsituation angepassten statischen Drehmomentkomponente (Cs) die folgenden Schritte aufweist:
- Berechnung einer Gewichtungsvariablen (ActionVveh_s), die die Anpassung des Sollwerts in einer Gefälle- und/oder Lastsituation in Abhängigkeit von einem Schwellwert aktivieren kann oder nicht, der von der Geschwindigkeit des Kraftfahrzeugs (Vveh) abhängt,
- Berechnung einer Prozentsatzvariablen (PourcC_charge_s), die in Abhängigkeit von der Korrektur kalibriert ist, die an der unbearbeiteten statischen Drehmomentkomponente (Cs_brut) aufgrund der Gefälle- und/oder Lastsituation vorgenommen wird,
- Vergleich und Integration der in den zwei vorhergehenden Rechenschritten berechneten Variablen mit einer Liste vorbestimmter Eingangsparameter, die die unbearbeitete statische Drehmomentkomponente (Cs_brut), das an das Rad anwendbare maximale augenblickliche Drehmoment (Cmax), die Geschwindigkeit des Kraftfahrzeugs (Vveh) und die an das Kraftfahrzeug angewendeten Widerstandsmomente (C_charge) enthalten.

10. Vorrichtung zur Steuerung eines automatisierten Getriebes einer Antriebseinheit für ein Kraftfahrzeug, die ein Sollwertsignal eines an die Räder des Kraftfahrzeugs anzuwendenden Drehmoments liefern kann, das zwei Komponenten, eine statische (Cs) und eine dynamische (Cd), enthält, die in Abhängigkeit von Eingangsdaten erarbeitet werden, die von einem Eingangsblock (1) geliefert werden, wobei die Eingangsdaten eine gespeicherte Liste von Parametern aufweisen, die für den Willen des Fahrers, den Zustand des Kraftfahrzeugs und die Umgebung des Kraftfahrzeugs repräsentativ sind, **dadurch gekennzeichnet, dass** sie aufweist:
- einen ersten Block (11), der eine dynamische Drehmomentkomponente (Cd_brut) ohne Anpassung an eine Gefälle- und/oder Lastsituation berechnen kann,
- einen zweiten Block (13) der Anpassung an die Gefälle- und/oder Lastsituation, der eine an die Gefälle- und/oder Lastsituation angepasste dynamische Drehmomentkomponente (Cd) in Abhängigkeit von einer ersten Liste vorbestimmter Eingangsparameter liefert,
- einen dritten Block (15), der eine statische Drehmomentkomponente (Cs_brut) ohne Anpassung an eine Gefälle- und/oder Lastsituation berechnen kann,
- einen vierten Block (17) der Anpassung an die Gefälle- und/oder Lastsituation, der eine an die Gefälle- und/oder Lastsituation angepasste statische Drehmomentkomponente (Cs_charge) in Abhängigkeit von einer zweiten Liste vorbestimmter Eingangsparameter liefert.

11. Steuervorrichtung nach Anspruch 10, **dadurch gekennzeichnet, dass** sie Mittel aufweist, die die an eine Gefälle- und/oder Lastsituation angepasste statische Drehmomentkomponente (Cs) mit zusätzlichen Korrekturen integrieren kann, die von der betrachteten Fahrsituation abhängen.

12. Steuervorrichtung nach einem der Ansprüche 10 oder 11, **dadurch gekennzeichnet, dass** die erste Liste vorbestimmter Parameter des zweiten Blocks (13) der Anpassung an die Gefälle- und/oder Lastsituation Signale enthält, die für die unbearbeitete dynamische Drehmomentkomponente (Cd_brut), das an die Räder des Kraftfahrzeugs anwendbare maximale augenblickliche Drehmoment (Cmax), die Geschwindigkeit des Kraftfahrzeugs (Vveh) und die an das Kraftfahrzeug angewendeten Widerstandsmomente (C_charge) repräsentativ sind.

13. Steuervorrichtung nach einem der Ansprüche 10 bis 12, **dadurch gekennzeichnet, dass** die zweite Liste vorbestimmter Parameter des vierten Blocks (17) der Anpassung an die Gefälle- und/oder Lastsituation Signale enthält, die für die unbearbeitete statische Drehmomentkomponente (Cs_brut), das an die Räder des Kraftfahrzeugs anwendbare maximale augenblickliche Drehmoment (Cmax), die Geschwindigkeit des Kraftfahrzeugs und die an das Kraftfahrzeug angewendeten Widerstandsmomente (C_charge) repräsentativ sind.

14. Steuervorrichtung nach einem der Ansprüche 10 bis 13, **dadurch gekennzeichnet, dass** der zweite Block (13) der Anpassung an die Gefälle- und/oder Lastsituation aufweist:
- Mittel, die eine erste Kartographie (33) speichern können, die fähig ist, eine Gewichtungsvariable (Adapt_Activ) zu liefern, die es ermöglicht, die Anpassung des Sollwerts in einer Gefälle- und/oder Lastsituation zu aktivieren, wenn die unbearbeitete dynamische Drehmomentkomponente (Cd_brut) positive Werte annimmt,
- Mittel, die eine zweite Kartographie (34) speichern können, die fähig ist, eine Gewichtungsvariable (ActionVveh_d) zu liefern, die die Anpassung des Sollwerts in einer Gefälle- und/oder Lastsituation in Abhängigkeit von einem Schwellwert aktivieren kann oder nicht, der von der Geschwindigkeit des Kraftfahrzeugs abhängt,
- Mittel, die eine dritte Kartographie (35) speichern können, die fähig ist, eine Prozentsatzvariable (PourcC_chargc_d) zu liefern, die in Abhängigkeit von der Korrektur kalibriert ist, die an der positiven unbearbeiteten dynamischen Drehmomentkomponente (Cd_brut) aufgrund der Gefälle- und/oder Lastsituation vorgenommen wird,
- Mittel zum Vergleich und zur Integration der von den Mitteln, die die Kartographien speichern können, gelieferten Variablen mit Variablen der ersten Liste vorbestimmter Parameter.

15. Steuervorrichtung nach einem der Ansprüche 10 bis 14, **dadurch gekennzeichnet, dass** der vierte Block der Anpassung an die Gefälle- und/oder Lastsituation aufweist:
- Mittel, die eine erste Kartographie (50) speichern können, die fähig ist, eine Variable (ActionVveh_s) zu liefern, die die Anpassung des Sollwerts in einer Gefälle- und/oder Lastsituation in Abhängigkeit von einem Schwellwert aktivieren kann oder nicht, der von der Geschwindigkeit (Vveh) des Kraftfahrzeugs abhängt,
- Mittel, die eine zweite Kartographie (52) speichern können, die eine Prozentsatzvariable (PourcC_charge_s) liefert, die in Abhängigkeit von der an der unbearbeiteten statischen Drehmomentkomponente (Cs_brut) aufgrund der Gefälle- und/oder Lastsituation vorgenommenen Korrektur kalibriert ist,
- Mittel zum Vergleich und zur Integration der von den zum Speichern der Kartographien fähigen Mitteln gelieferten Variablen mit Variablen der zweiten Liste vorbestimmter Parameter.
